(19) Europäisches Patentamt
European Patent Office
Office européen des brevets

(11) EP 1 160 304 A2

(12) EUROPÄISCHE PATENTANMELDUNG

(43) Veröffentlichungstag:
**05.12.2001 Patentblatt 2001/49**

(21) Anmeldenummer: **01112535.8**

(22) Anmeldetag: **23.05.2001**

(51) Int Cl.[7]: **C09K 19/00**, C09K 19/38, C09D 5/00, C08F 20/10, C09B 67/00

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.05.2000 DE 10025782**

(71) Anmelder: **BASF AKTIENGESELLSCHAFT
67056 Ludwigshafen (DE)**

(72) Erfinder:
- **Prechtl, Frank, Dr.
60318 Frankfurt (DE)**
- **Haremza, Sylke, Dr.
69151 Neckargemünd (DE)**
- **Meyer, Frank, Dr.
69115 Heidelberg (DE)**
- **Parker, Robert
68151 Mannheim (DE)**
- **Kürschner, Kathrin, Dr.
68199 Mannheim (DE)**
- **Schumacher, Peter, Dr.
68163 Mannheim (DE)**
- **Schmidt, Hans-Werner, Prof. Dr.
95444 Bayreuth (DE)**
- **Schmitt, Gerold
64297 Darmstadt (DE)**
- **Giesa, Reiner, Dr.
95445 Bayreuth (DE)**

# (54) Flüssigkristalline Stoffmenge

(57) Die Erfindung betrifft flüssigkristalline Stoffgemenge, welche als Komponenten enthalten

A) mindestens eine Verbindung der Formel I

$$Z^1\text{-}Y^1\text{-}A^1\text{-}Y^3\text{-}M\text{-}Y^4\text{-}A^2\text{-}Y^2\text{-}Z^2 \quad (I),$$

in welcher die Variablen unabhängig voneinander bedeuten:
$Z^1$ und $Z^2$ reaktive Gruppierungen, $Y^1$ bis $Y^4$ verknüpfende Einheiten, $A^1$ und $A^2$ Spacer und M eine mesogene Gruppe,

B) mindestens eine reaktive Verbindung ausgewählt aus der Gruppe bestehend aus den Untergruppen b1) Vinyl- oder Allylethern, b2) Vinyl- oder Allylestern gesättigter oder ungesättigter Carbonsäuren, b3) Methacryl- oder Acrylsäureestern mono- oder polyfunktioneller Alkohole, b4) Polyester (meth)acrylaten, b5) vinylaromatischen oder vinylheteroaromatischen Verbindungen und b6) Verbindungen der allgemeinen Formel II

$$CH_2\text{=}CH\text{-}NR^2\text{-}R^1 \quad (II),$$

in welcher $R^1$ und $R^2$ die in der Beschreibung näher erläuterte Bedeutung besitzen, sowie

C) gegebenenfalls weitere Zusätze.

Weiter betrifft die vorliegende Erfindung die Verwendung der erfindungsgemäßen Stoffgemenge zur Herstellung optischer Bauelemente, zum Bedrucken oder Beschichten von Substraten, zur Herstellung von Dispersionen und Emulsionen, Filmen und Pigmenten.

Die vorliegende Erfindung betrifft darüber hinaus optische Bauelemente, bedruckte oder beschichtete Substrate, Dispersionen und Emulsionen, Filme und Pigmente, welche unter Verwendung der erfindungsgemäßen Stoffgemenge hergestellt worden sind.



Printed by Jouve, 75001 PARIS (FR)

## Beschreibung

Die Erfindung betrifft flüssigkristalline Stoffgemenge, welche als Komponenten enthalten

A) mindestens eine Verbindung der Formel I

$$Z^1\text{-}Y^1\text{-}A^1\text{-}Y^3\text{-}M\text{-}Y^4\text{-}A^2\text{-}Y^2\text{-}Z^2 \qquad \text{I,}$$

in welcher die Variablen unabhängig voneinander bedeuten:

$Z^1$ und $Z^2$ reaktive Gruppierungen,

$Y^1$ bis $Y^4$ verknüpfende Einheiten,

$A^1$ und $A^2$ Spacer und

M eine mesogene Gruppe,

B) mindestens eine reaktive Verbindung ausgewählt aus der Gruppe bestehend aus den Untergruppen

b1) Vinyl- oder Allylethern,

b2) Vinyl- oder Allylestern gesättigter oder ungesättigter Carbonsäuren,

b3) Methacryl- oder Acrylsäureestern mono- oder polyfunktioneller Alkohole,

b4) Polyester(meth)acrylaten,

b5) vinylaromatischen oder vinylheteroaromatischen Verbindungen und

b6) Verbindungen der allgemeinen Formel II

$$CH_2{=}CH{-}NR^2{-}R^1 \qquad \text{II,}$$

in welcher $R^1$ und $R^2$ die in der Beschreibung näher erläuterte Bedeutung besitzen, sowie

C) gegebenenfalls weitere Zusätze.

Weiter betrifft die vorliegende Erfindung die Verwendung der erfindungsgemäßen Stoffgemenge zur Herstellung optischer Bauelemente, zum Bedrucken oder Beschichten von Substraten, zur Herstellung von Dispersionen und Emulsionen, Filmen und Pigmenten.

Die vorliegende Erfindung betrifft darüber hinaus optische Bauelemente, bedruckte oder beschichtete Substrate, Dispersionen und Emulsionen, Filme und Pigmente, welche unter Verwendung der erfindungsgemäßen Stoffgemenge hergestellt worden sind.

Zur Herstellung cholesterischer Flüssigkristallmischungen bedient man sich meist eines flüssigkristallinen (nematischen) Basismaterials und eines oder mehrerer optisch aktiver Dotierstoffe.

Trotz verfahrenstechnischer Optimierungen -wozu auch die Wahl geeigneter und möglichst kostengünstiger Rohstoffe zu zählen istbleibt die Herstellung der flüssigkristallinen Basismaterialien in der Regel sowohl präparativ als auch kostenmäßig aufwendig. Üblicherweise trifft dies in weit stärkerem Maße für die Herstellung chiraler Dotierstoffe zu, da hier in der Regel von enantiomerenreinen Ausgangsstoffen ausgegangen wird und u.U. eine aufwendige Nachreinigung des erhaltenen Rohprodukts erforderlich ist.

Die Aufgabe der vorliegenden Erfindung bestand nun darin, modifizierte flüssigkristalline Basismaterialien -gegebenenfalls in Mischung mit chiralen Dotierstoffen- bereitzustellen, welche kostengünstiger hergestellt werden können und dabei hinsichtlich ihrer optischen Eigenschaften mindestens gleich gut wie oder sogar besser als die unmodifizierten Basismaterialien sind.

Überraschenderweise erhielt man durch Mischen der flüssigkristallinen (gegebenenfalls dotierten) Basismaterialien mit den polymerisierbaren Verbindungen der eingangs erwähnten Untergruppen b1) bis b6) flüssigkristalline Stoffgemenge, welche diese Aufgabe lösen.

Demgemäß wurden flüssigkristalline Stoffgemenge gefunden, welche als Komponenten enthalten

A) mindestens eine Verbindung der Formel I

$$Z^1\text{-}Y^1\text{-}A^1\text{-}Y^3\text{-}M\text{-}Y^4\text{-}A^2\text{-}Y^2\text{-}Z^2 \qquad \text{I,}$$

in welcher die Variablen unabhängig voneinander folgende Bedeutung haben:

$Z^1$ und $Z^2$ reaktive Gruppierungen,

$Y^1$ bis $Y^4$ eine chemische Einfachbindung, Sauerstoff, Schwefel, -O-CO-, -CO-O-, -O-CO-O-, -CO-NR-, -NR-CO-, -O-CO-NR-, -NR-CO-O- oder -NR-CO-NR-,

R Wasserstoff oder $C_1$-$C_4$-Alkyl,

$A^1$ und $A^2$ Spacer mit 1 bis 30 C-Atomen, in welchen die Kohlenstoffkette durch ein oder mehrere Methyl, Fluor, Chlor oder Brom substituiert und/oder durch Sauerstoff in Etherfunktion, Schwefel in Thioetherfunktion oder durch nichtbenachbarte Imino- oder $C_1$-$C_4$-Alkyliminogruppen unterbrochen sein kann und

M eine mesogene Gruppe,

B) mindestens eine reaktive Verbindung ausgewählt aus der Gruppe bestehend aus den Untergruppen

b1) Vinyl- oder Allylethern,

b2) Vinyl- oder Allylestern gesättigter oder ungesättigter Carbonsäuren,

b3) Methacryl- oder Acrylsäureestern mono- oder polyfunktioneller Alkohole,

b4) Polyester(meth)acrylaten,

b5) vinylaromatischen oder vinylheteroaromatischen Verbindungen und

b6) Verbindungen der allgemeinen Formel II

$$CH_2{=}CH\text{—}NR^2\text{—}R^1 \qquad \text{II,}$$

in welcher bedeuten:

$R^1$

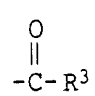

oder $-R^3$,

$R^2$ Wasserstoff, $C_1$-$C_4$-Alkyl oder gemeinsam mit $R^3$ eine gesättigte oder ungesättigte $C_3$-, $C_4$- oder $C_5$-Alkylenbrücke, in der bis zu zwei Gruppen $CH_2$ durch NH, N($C_1$-$C_4$-Alkyl), N($C_6$-$C_{10}$-Aryl) oder Sauerstoff und biszu zwei Gruppen CH durch N ersetzt sein können und

$R^3$ Wasserstoff, $C_1$-$C_4$-Alkyl oder einen Rest, der zusammen mit $R^2$ eine gesättigte oder ungesättigte $C_3$-, $C_4$- oder $C_5$-Alkylenbrücke, in der bis zu zwei Gruppen $CH_2$ durch NH, N($C_1$-$C_4$-Alkyl), N($C_6$-$C_{10}$-Aryl) oder Sauerstoff und bis zu zwei Gruppen CH durch N ersetzt sein können, sowie

C) gegebenenfalls weitere Zusätze.

Als Spacer $A^1$ und $A^2$ kommen alle dem Fachmann für diesen Zweck bekannten Gruppen in Betracht. Die Spacer enthalten in der Regel ein bis 30, vorzugsweise ein bis 12, besonders bevorzugt ein bis sechs Kohlenstoffatome und bestehen insbesondere aus linearen aliphatischen Gruppen. Die Kohlenstoffkette kann durch ein oder mehrere Methyl, Fluor, Chlor oder Brom substituiert und/oder durch Sauerstoff in Etherfunktion, Schwefel in Thioetherfunktion oder durch nichtbenachbarte Imino- oder $C_1$-$C_4$-Alkyliminogruppen unterbrochen sein.

Repräsentative Spacer sind beispielsweise:

$-(CH_2)_u-$, $-(CH_2CH_2O)_vCH_2CH_2-$, $-CH_2CH_2SCH_2CH_2-$, $-CH_2CH_2NHCH_2CH_2-$,

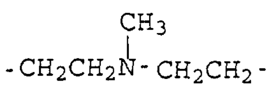 , 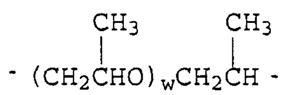 , 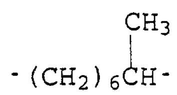 oder 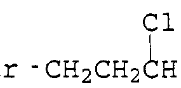 ,

wobei u für 1 bis 30, vorzugsweise 1 bis 12, v für 1 bis 14, vorzugsweise 1 bis 5, und w für 1 bis 9, vorzugsweise 1 bis 3, steht.

Bevorzugte Spacer sind Ethylen, Propylen, n-Butylen, n-Pentylen und n-Hexylen.

Als mesogene Gruppen M können alle dem Fachmann als solche geeignete Gruppen dienen.

Insbesondere kommen mesogene Gruppen der Formel Ia

$$(-T-Y^5)_r-T- \qquad \text{Ia}$$

in Betracht, worin die Variablen bedeuten

T zweiwertige gesättigte oder ungesättigte carbo- oder heterocyclische Reste

$Y^5$ -chemische Einfachbindung, Sauerstoff, Schwefel, -CO-, -O-CO-, -CO-O-, -O-CO-O-, -CO-NR-, -NR-CO-, -O-CO-NR-, -NR-CO-O- oder -NR-CO-NR- und

r Werte von 0, 1, 2 oder 3, wobei für r > 0 sowohl die Reste T als auch die Gruppen $Y^5$ untereinander gleich oder verschieden sein können.

Die Reste T können durch Fluor, Chlor, Brom, Cyan, Hydroxy, Formyl, Nitro, $C_1$-$C_{20}$-Alkyl, $C_1$-$C_{20}$-Alkoxy, $C_1$-$C_{20}$-Alkoxycarbonyl, $C_1$-$C_{20}$-Monoalkylaminocarbonyl, $C_1$-$C_{20}$-Alkylcarbonyl, $C_1$-$C_{20}$-Alkylcarbonyloxy oder $C_1$-$C_{20}$-Alkylcarbonylamino substituierte Ringsysteme sein. Bevorzugte Reste T sind:

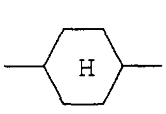 , 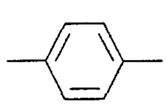 , 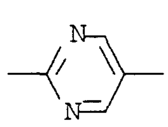 , 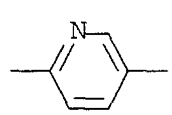 , 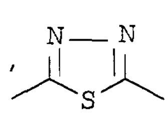 ,

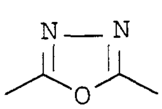 , 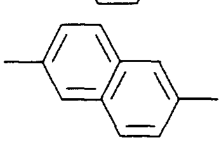 , 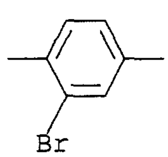 , 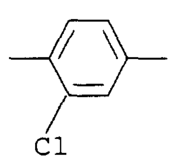 , 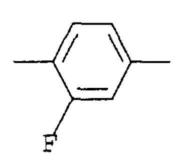 ,

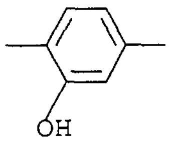 , 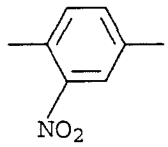 , 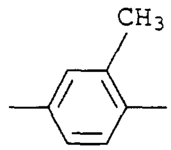 , 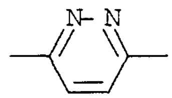

und 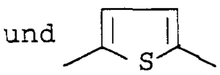 .

Als mesogene Gruppen M kommen in Frage beispielsweise:

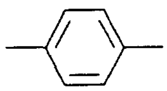 , 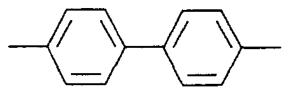 , 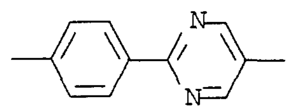 ,

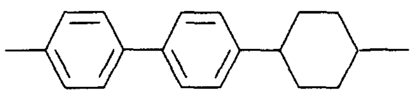 , 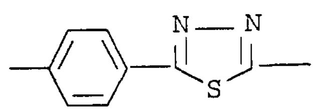 ,

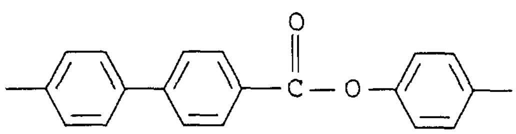 , 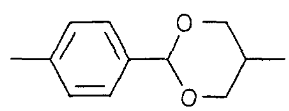 ,

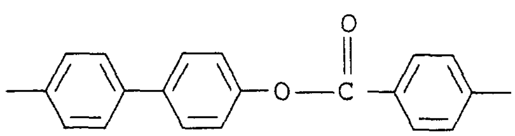 , 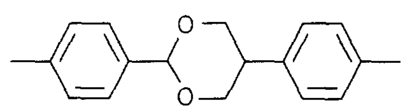 ,

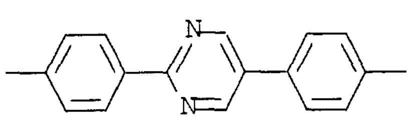 , 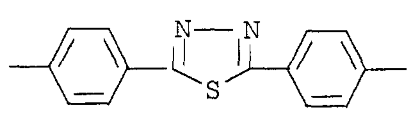 ,

oder 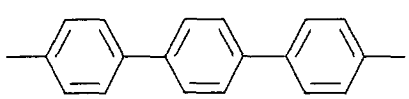 .

Weitere mögliche mesogene Gruppen M gehorchen den folgenden Formeln:

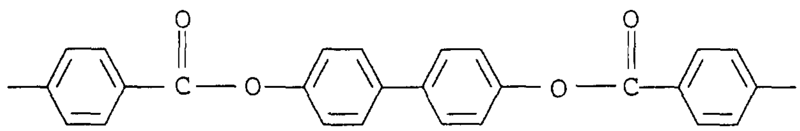 ,

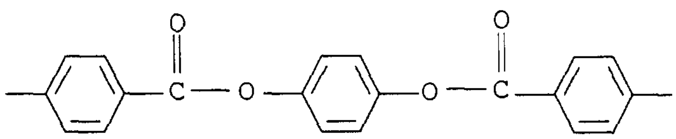 , 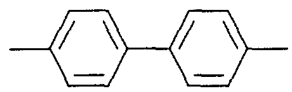 ,

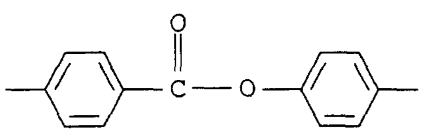 oder 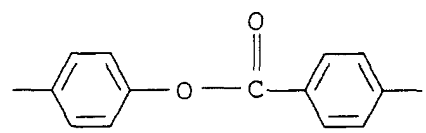 ,

Die zuvor gezeigten (unsubstituierten) mesogenen Gruppen können natürlich entsprechend der oben gegebenen Beispiele für mögliche Reste T noch durch Fluor, Chlor, Brom, Cyan, Hydroxy, Formyl, Nitro, $C_1$-$C_{20}$-Alkyl, $C_1$-$C_{20}$-Alkoxy, $C_1$-$C_{20}$-Alkoxycarbonyl, $C_1$-$C_{20}$-Monoalkylaminocarbonyl, $C_1$-$C_{20}$-Alkylcarbonyl, $C_1$-$C_{20}$-Alkylcarbonyloxy oder $C_1$-$C_{20}$-Alkylcarbonylamino substituiert sein. Bevorzugte Substituenten sind vor allem kurzkettige aliphatische Reste wie Methyl, Ethyl, n-Propyl, i-Propyl, n-Butyl, i-Butyl, sek.-Butyl, tert.-Butyl sowie Alkoxy-, Alkoxycarbonyl-, Alkylcarbonyl-, Alkylcarbonyloxy-, Alkylcarbonylamino- und Monoalkylaminocarbonylreste, die diese Alkylgruppen enthalten.

Als reaktive Gruppierungen $Z^1$ und $Z^2$ kommen beispielsweise in Frage:
$CH_2$=CH-, CH≡C-

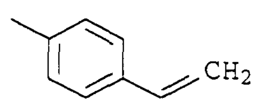 , 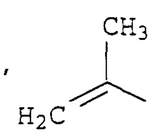 , 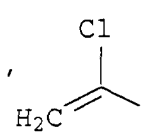 ,

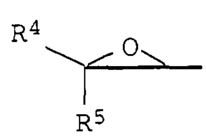 , 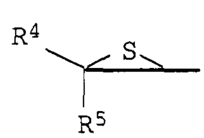 , 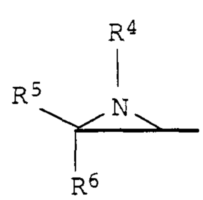 , 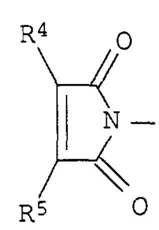

-N=C=O, -N=C=S, -O-C≡N, -COOH, -OH oder -$NH_2$ wobei die Reste $R^4$ bis $R^6$ gleich oder verschieden sein können und Wasserstoff oder $C_1$-$C_4$-Alkyl, wie Methyl, Ethyl, n-Propyl, iso-Propyl, n-Butyl, iso-Butyl, sec.-Butyl oder tert.-Butyl bedeuten. Im Falle der Maleinimido-Gruppierung und der Gruppierungen -N=C=O, -N=C=S, -O-C≡N, -COOH, -OH und -$NH_2$ kommt der verknüpfenden Einheit $Y^1$ und/oder $Y^2$ die Bedeutung einer chemischen Einfachbindung zu.

Von den reaktiven Gruppierungen können die Cyanate spontan zu Cyanuraten trimerisieren. Die anderen genannten Gruppierungen benötigen zur Polymerisation weitere Verbindungen (der Formel I oder andere Hilfsverbindungen) mit komplementären reaktiven Gruppierungen. So können beispielsweise Isocyanate mit Alkoholen zu Urethanen und mit Aminen zu Harnstoffderivaten polymerisieren. Analoges gilt für Thiirane und Aziridine. Carboxylgruppen können zu Polyestern und Polyamiden kondensiert werden. Die Maleinimido-Gruppierung eignet sich besonders zur radikalischen Copolymerisation mit olefinischen Verbindungen, wie beispielsweise Styrol oder Verbindungen, welche Styrolstrukturelemente enthalten.

Die reaktiven Gruppierungen können dabei, zusammen mit den ihnen entsprechenden komplementären reaktiven Gruppierungen, in ein und derselben Verbindung der Formel I zugegen sein, so dass diese Verbindung potenziell auch mit sich selbst polymerisieren kann, oder in einer weiteren Verbindung der Formel I. Diese reaktiven Gruppierungen können sich aber auch, zusammen mit den entsprechenden komplementären reaktiven Gruppierungen, in ein und derselben Hilfsverbindung oder in weiteren solchen Hilfsverbindungen befinden, welche nicht der Formel I entsprechen. Beispielsweise wären dies mehrwertige (Amino-)Alkohole, welche mit möglichen Isocyanat-Gruppierungen einer Verbindung der Formel I abreagieren können.

Als reaktive Gruppierungen sind der 1-Methylvinyl- sowie der Vinylrest hervorzuheben. Insbesondere sind hier, zusammen mit $Y^1$ bzw. $Y^2$ in der Bedeutung -CO-O- bzw. -O-CO-, der Methacrylat- sowie der Acrylatrest zu nennen.

Besonders bevorzugte Verbindungen der Formel I besitzen den nachfolgend gezeigten Aufbau

$$Z'\text{-CO-O-}(CH_2)_{u'}\text{-O-CO-O-}(\text{-}T'\text{-}Y^{5'})_{r'}\text{-}T'\text{-O-CO-O-}(CH_2)_{u'}\text{-O-CO-}Z',$$

wobei u' gleiche Werte von 2, 3, 4, 5 oder 6 annimmt,

Z' für gleiche Reste 1-Methylvinyl oder Vinyl

T' für unsubstituiertes oder mit $C_1$-$C_{20}$-Alkyl substituiertes 1,4-Phenylen und

$Y^{5'}$ für -O-CO- bzw. -CO-O- steht und

r' Werte von 1 oder 2 annimmt, wobei die Reste T' gleich oder verschieden sein können.

Insbesondere handelt es sich bei der mesogenen Gruppe $(\text{-}T'\text{-}Y^{5'})_{r'}\text{-}T'\text{-}$ um nachfolgende Gruppierungen:

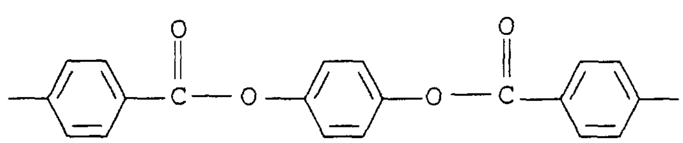 ,

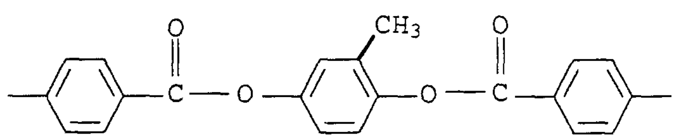 ,

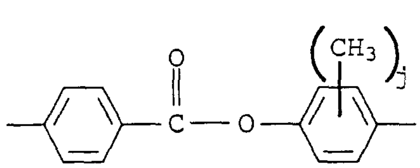 oder 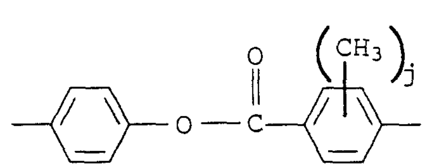 ,

mit j gleich 0 oder 1.

Zu den reaktive Verbindungen der Untergruppe b1) zählen Vinyl- oder Allylether monofunktioneller Alkohole, wie z.B. des Lauryl-, Myristyl-, Palmityl- oder Stearylalkohols, aber auch Divinyl- oder Diallylether bifunktioneller Alkohole, wie z.B. des Ethylenglycols und des Butan-1,4- diols.

Zu den reaktiven Verbindungen der Untergruppe b2) zählen Vinyl- oder Allylester von Carbonsäuren, wie z. B. der Laurin-, Myristin-, Palmitin- oder Stearinsäure, oder von Dicarbonsäuren, wie z.B. der Bernsteinsäure und Adipinsäure.

Zu den reaktiven Verbindungen der Untergruppe b3) zählen Methacryl- oder Acrylsäureester mono- oder polyfunktioneller Alkohole, insbesondere solcher, welche neben der(den) Hydroxylgruppe(n) keine weiteren funktionellen Gruppen oder allenfalls Ethergruppen enthalten. Beispiele solcher Alkohole sind bifunktionelle Alkohole, wie Ethylenglykol, Propylenglykol, und deren höher kondensierte Vertreter, wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole. Weiterhin fallen in diese Untergruppe auch (Meth)acrylsäureester ungesättigter Alkohole, wie etwa des Tricyclodecenylalkohols, d.h. Ester mit nachstehender Struktur (auch bekannt unter dem Namen Dihydrodicyclopentadienylacrylat)

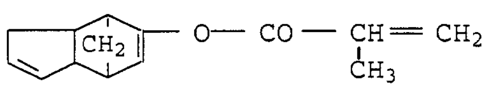 oder 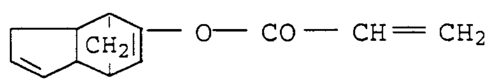 ,

sowie die Acryl-, Methacryl- und Cyanacrylsäureester des Allylalkohols.

Bei den Polyester(meth)acrylaten der Untergruppe b4) handelt es sich um (Meth)acrylsäureester von Polyesterolen. Als Polyesterole sind solche Verbindungen anzusprechen, welche aus Veresterung von Polycarbonsäuren mit Polyolen resultieren. Die Ausgangsstoffe für solche hydroxylgruppenhaltige Polyester sind dem Fachmann bekannt. Als Carbonsäuren kommen Bernsteinsäure, Glutarsäure, Adipinsäure, Sebacinsäure, o-Phthalsäure und deren Isomere und Hydrierungsprodukte, sowie veresterbare oder umesterbare Derivate der genannten Säuren, wie z.B. Anhydride oder Dialkylester, als Polyole die in Untergruppe b3) genannten Alkohole, vorzugsweise Ethylenglykol, 1,2- und 1,3-Propylenglykol, 1,4-Butandiol, 1,6-Hexandiol, Neopentylglykol, Cyclohexandimethanol sowie Polyglykole vom Typ des Ethylenglykols und Propylenglykols in Betracht.

Zur Untergruppe b5) zählen beispielsweise 9-Vinylcarbazol, Styrol, α-Methylstyrol, die Isomeren sowie (großtechnisch anfallenden) Isomerengemische des Nitrostyrols, der Styrolsulfonsäure, des Vinyltoluols, des Divinylbenzols, des Vinylanilins und des Vinylphenols. Weiter sind in dieser Untergruppe zu nennen die Isomeren sowie die (großtechnisch anfallenden) Isomerengemische des Vinylpyridins oder auch des Methylvinylpyridins. Insbesondere sind hier großtechnisch von Bedeutung das 2- und 4-Vinylpyridin sowie das 2-Methyl-5-vinylpyridin. Als weiterer Vertreter dieser Untergruppe sei auch noch das Triallylcyanurat erwähnt.

Zur Untergruppe b6) zählen beispielsweise das N-Vinylformamid, N-Vinyl-2-pyrrolidon sowie N-Vinyl-ε-caprolactam. Entsprechend Formel II hat $R^1$ dabei in allen Verbindungen die Bedeutung -CO-$R^3$. $R^3$ und $R^2$ sind in ersterer Verbindung jeweils Wasserstoff bzw. in letzteren beiden Verbindungen bildet $R^3$ zusammen mit $R^2$ eine gesättigte $C_3$- bzw. $C_5$-Alkylenbrücke.

Bevorzugt verwendet man als Komponente B mindestens eine Verbindung ausgewählt aus der Gruppe bestehend aus den Untergruppen b3), b5) und b6), besonders bevorzugt ausgewählt aus der Gruppe bestehend aus den Untergruppen b5) und b6).

Insbesondere seien hier Styrol, N-Vinylformamid, 2- und 4-Vinylpyridin sowie 2- und 4-Divinylbenzol angeführt.

Die reaktiven Verbindungen (Komponente B) werden üblicherweise in einem Anteil von etwa 0,5 bis 30,0, insbesondere 4,0 bis 20 Gew.-% bezogen auf das Gesamtgewicht aus Komponenten A), B) und gegebenenfalls C) des flüssigkristallinen Stoffgemenges eingesetzt. Anzumerken ist hierbei, dass diese Grenzen lediglich als Anhaltspunkte zu verstehen sind. Wichtig ist, dass keine Phasenseparation stattfindet, also eine homogene flüssigkristalline Phase vorliegt. Die Phasengrenzen lassen sich im Normalfall durch einfache Vorversuche bestimmen.

Bevorzugte flüssigkristalline Stoffgemenge enthalten als Komponente A) mindestens eine Verbindung der Formel I, in welcher $Z^1$ und/oder $Z^2$ photopolymerisierbare Gruppierungen bedeuten. Insbesondere sind hier, wie bereits weiter oben angeführt, der 1-Methylvinyl- sowie der Vinylrest und, zusammen mit $Y^1$ bzw. $Y^2$ in der Bedeutung -CO-O- bzw. -O-CO-, der Methacrylat- sowie der Acrylatrest als $Z^1$-$Y^1$- bzw. -$Y^2$-$Z^2$ hervorzuheben. Besonders bevorzugt enthalten diese Stoffgemenge als weiteren Zusatz (Komponente C)) mindestens einen Photoinitiator.

Solche Photoinitiatoren sind beispielsweise unter den Markennamen Lucirin® (BASF Aktiengesellschaft, Ludwigshafen), Irgacure® und Darocure® (beide Ciba Specialty Chemicals) kommerziell verfügbar. Insbesondere finden die Initiatoren Lucirin® TPO, Irgacure® 184, Irgacure® 369, Irgacure® 907 und Darocure® 1173 Verwendung.

Der (die) Photoinitiator(en) wird (werden) üblicherweise in einem Anteil von etwa 0,5 bis 5,0 Gew.-% bezogen auf das Gesamtgewicht der Komponenten A), B) und C) des erfindungsgemäßen Stoffgemenges eingesetzt.

Weitere bevorzugte Stoffgemenge enthalten als Komponente C) noch mindestens eine chirale Verbindung.
Diese chiralen Verbindungen entsprechen insbesondere den allgemeinen Formeln Ib bis Ie

$$(Z^3\text{-}Y^6\text{-})_nX \qquad \text{Ib}, \qquad (Z^3\text{-}Y^6\text{-}A^3\text{-}Y^7\text{-})_nX \qquad \text{Ic},$$

$$(Z^3\text{-}Y^6\text{-})_nX \qquad \text{Id}, \qquad (Z^3\text{-}Y^6\text{-}A^3\text{-}Y^7\text{-M-}Y^8\text{-})_nX \qquad \text{Ie},$$

in welchen die Variablen $Z^3$ reaktive Gruppierungen, $Y^6$ bis $Y^8$ verknüpfende Einheiten, $A^3$ Spacer und M mesogene Gruppen bezeichnen und welche dieselbe allgemeine Bedeutung wie die Variablen $Z^1$ und $Z^2$, $Y^1$ bis $Y^5$, $A^1$ und $A^2$ und M in den Formeln I und Ia besitzen. n steht für Werte von 1, 2, 3, 4, 5 oder 6 und X für entsprechende n-wertige chirale Reste. Die n an den chiralen Rest X gebundenen Gruppierungen können hierbei gleich oder verschieden sein.
Mögliche Reste X sind beispielsweise

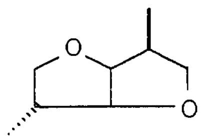 , 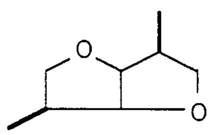 , 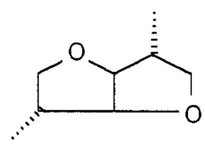 , 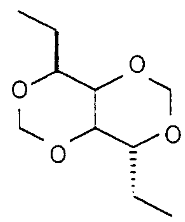 ,

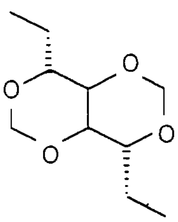 , 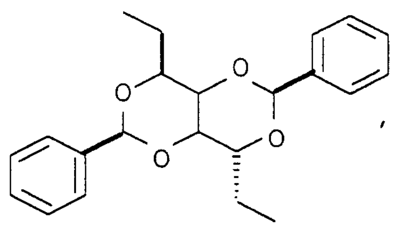 , 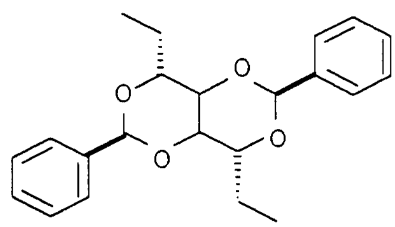

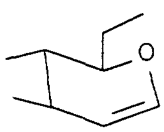 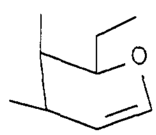 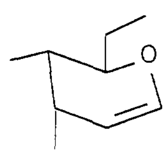 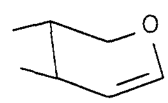

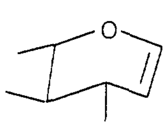 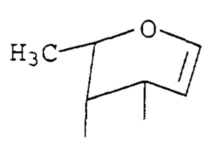 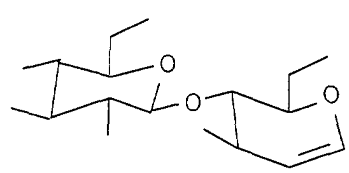

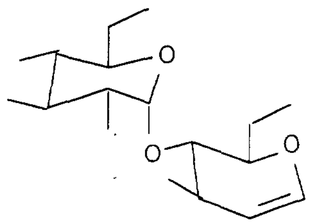
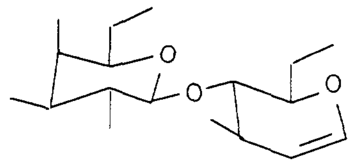

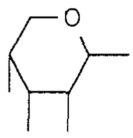
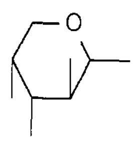
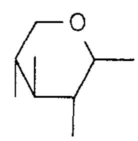
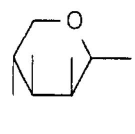

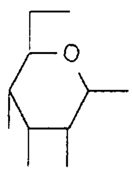
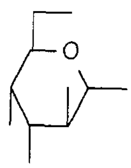
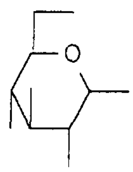
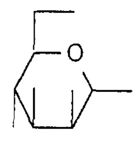

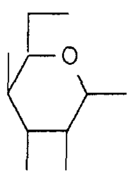
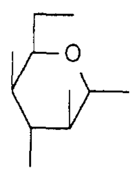
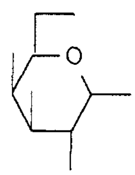
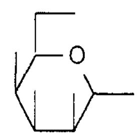

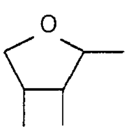
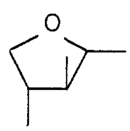
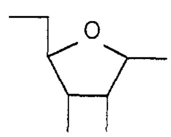
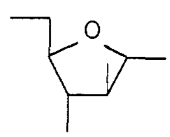
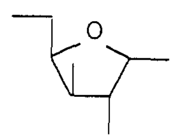

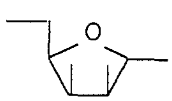
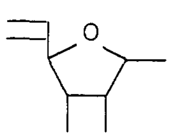
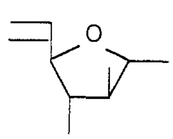
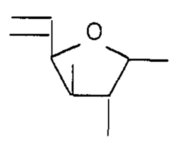
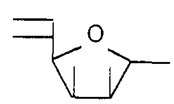

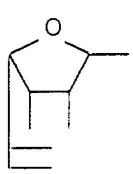
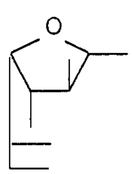
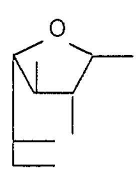
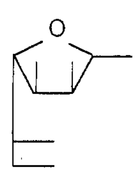

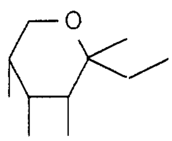
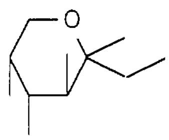
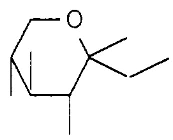
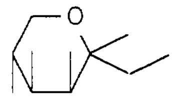
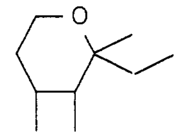

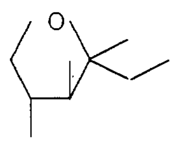
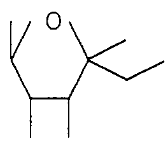
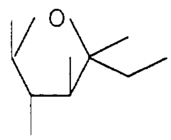
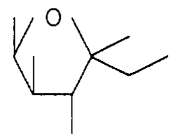
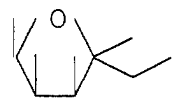

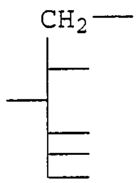
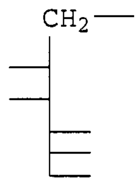
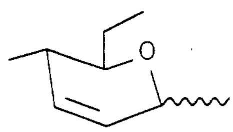
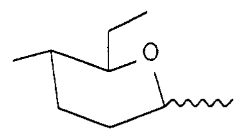

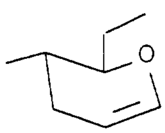
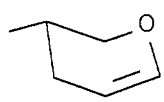
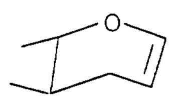
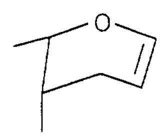

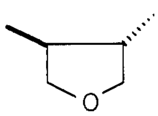
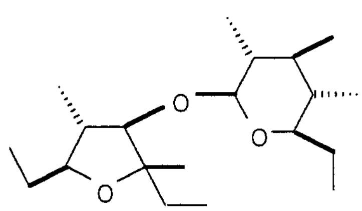

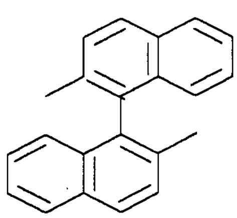
oder
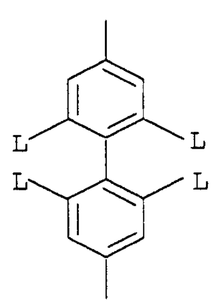

wobei

L R, RO, COOR, OCOR, CONHR oder NHCOR, Halogen, insbesondere Fluor, Chlor oder Brom, und R $C_1$-$C_4$-Alkyl, wie z.B. Methyl, Ethyl, n-Propyl, i-Propyl, n-Butyl, i-Butyl, tert.-Butyl bedeuten.

Besonders bevorzugt sind für X

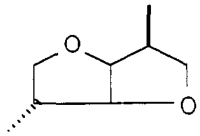
,
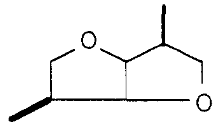
,
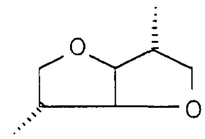
,

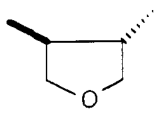
,
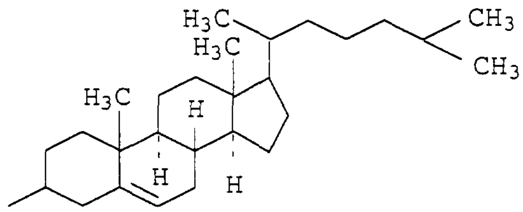
,

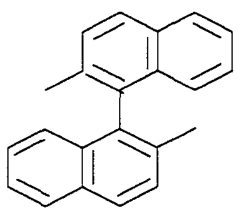
oder
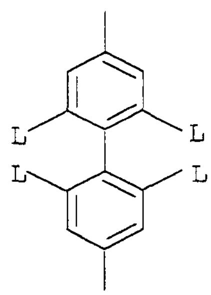

Chirale Verbindungen, welche diese sowie weitere geeignete chirale Reste X enthalten, sind beispielsweise in den Schriften WO 95/16007, DE-A 1 95 20 660, DE-A 195 20 704, DE 198 43 724 und der älteren deutschen Patentanmeldung 100 13 507.2 genannt.

Besonders bevorzugte chirale Verbindungen besitzen den nachfolgend gezeigten, an die zuvor gezeigte Formel Ie angelehnten Aufbau

$$[Z^{3'}\text{-CO-O-}(CH_2)_{u''}\text{-}Y^{7'}\text{-(-T''-}Y^{5''})_{r''}\text{-T''-}Y^{8'}\text{-}]_2\ X,$$

wobei u" gleiche Werte von 2, 3, 4, 5 oder 6 annimmt,

$Z^{3'}$ für gleiche Reste 1-Methylvinyl oder Vinyl

$Y^{7'}$ für gleiche verknüpfende Einheiten Sauerstoff oder -O-CO-O-

$Y^{8'}$ für gleiche verknüpfende Einheiten -O-CO- bzw. -CO-O-,

T" für unsubstituiertes oder mit $C_1$-$C_{20}$-Alkyl substituiertes 1,4-Phenylen und

$Y^{5''}$ für -O-CO- bzw. -CO-O- steht,

r" Werte von 0 oder 1 annimmt, wobei die Reste T" für r" gleich 1 gleich oder verschieden sein können, und

X insbesondere für die bereits weiter oben aufgeführten Gruppen

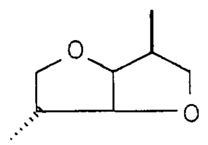 , 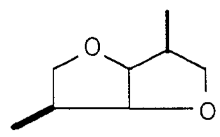 oder 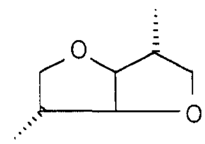

steht.

Bei der mesogenen Gruppe $(-T''-Y^{5''})_{r''}-T''-$ handelt es sich insbesondere um nachfolgende Gruppierungen:

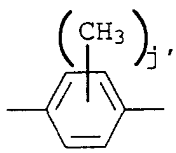 , 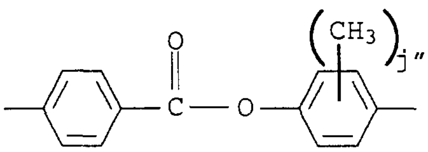 oder 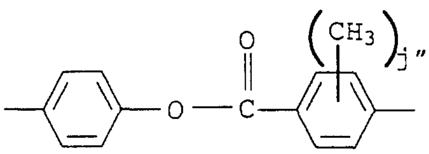

mit j' und j" gleich 0 oder 1.

Im Rahmen der vorliegenden Erfindung wird die Verwendung der erfindungsgemäßen Stoffgemenge zur Herstellung optischer Bauelemente, wie z.B. Polarisatoren oder Filtern, beansprucht.

Weiter werden solche optischen Bauelemente beansprucht, welche unter Verwendung der erfindungsgemäßen Stoffgemenge erhalten worden sind.

Gegenstand der vorliegenden Erfindung ist weiter die Verwendung der erfindungsgemäßen Stoffgemenge zum Bedrucken oder Beschichten von Substraten. Hierbei können, außer den bereits erwähnten Photoinitiatoren und chiralen Verbindungen, als Komponente C) noch weitere Zusätze enthalten sein. In Frage kommen hierbei vor allem Zusätze ausgewählt aus der Gruppe bestehend aus Verdünnungsmitteln, Entschäumern und Entlüftern, Gleit- und Verlaufshilfsmitteln, thermisch härtenden oder strahlenhärtenden Hilfsmitteln, Substratnetzhilfsmitteln, Netz- und Dispergierhilfsmitteln, Hydrophobierungsmitteln, Haftvermittlern und Hilfsmitteln zur Verbesserung der Kratzfestigkeit, Farbstoffen und Pigmenten und Zusätze ausgewählt aus der Gruppe der Licht-, Hitze- und/oder Oxidationsstabilisatoren. Die chemisch-physikalische Natur dieser Zusätze wird ausführlich in der älteren deutschen Anmeldung 199 05 394.4 gewürdigt. Die in vorliegender Anmeldung beanspruchten Stoffgemenge können dementsprechend wie in der älteren deutschen Schrift 199 05 394.4 ausgeführt, als Bedruckungs- und Beschichtungsmittel für Substrate eingesetzt werden.

Im Rahmen der vorliegenden Erfindung werden weiter bedruckte oder beschichtete Substrate beansprucht, welche unter Verwendung der erfindungsgemäßen Stoffgemenge, gegebenenfalls in Mischung mit den zuvor erwähnten Zusätzen als Komponente C), hergestellt worden sind.

Als solche Substrate kommen neben Papier- und Kartonageprodukten, beispielsweise für Tragetaschen, Zeitschriften, Broschüren, Geschenkverpackungen und Verpackungsmaterialien für Gebrauchs-, Genuss- und Luxusgüter, auch Folien, etwa für dekorative und nichtdekorative Verpackungszwecke, sowie Textilien jedweder Art und Leder in Frage.

Weitere Substrate sind aber auch Güter der (Unterhaltungs-)Elektronik, wie etwa MC-, MD-, DVD- und Videorecorder, Fernseher, Radios, Telefone/Handys usw. und EDV-Geräte, Güter aus dem Freizeit-, Sport-, Haushalts- und Spielsektor, wie etwa Fahrräder, Kinderfahrzeuge, Skier, Snow- und Surfboards, Inline-Skater und Roll- und Schlittschuhe sowie Haushaltsgeräte. Darüber hinaus sind unter solchen Substraten beispielsweise auch Schreibutensilien und Brillengestelle zu verstehen.

Weitere Substrate sind aber auch im Bausektor anzutreffende Oberflächen, wie Gebäudewände oder auch Fensterscheiben. In letzterem Fall kann neben einem dekorativen auch ein funktioneller Effekt gewünscht sein. So ist es möglich, Mehrfachschichten auf dem Fenstermaterial zu erzeugen, deren einzelne Schichten verschiedene chemisch-physikalische Eigenschaften besitzen. Werden z.B. jeweils Schichten der mit chiralen Verbindungen dotierten erfindungsgemäßen Stoffgemenge mit entgegengesetzter Helizität (durch Verwendung zueinander enantiomerer chiraler Verbindungen als Dotierstoff/Komponente C)) oder einzelne Schichten von dotierten flüssigkristallinen Stoffgemengen gleicher Helizität aber jeweils unterschiedlicher Ganghöhe und somit unterschiedlicher Reflektionseigenschaften (durch Verwendung unterschiedlicher Konzentrationen an Dotierstoff/Komponente C)) aufgebracht und vernetzt, so können gezielt bestimmte Wellenlängen oder Wellenlängenbereiche des Lichtspektrums reflektiert werden. Hierdurch ist beispielsweise eine IR- oder UV-reflektierende Fensterbeschichtung möglich. Zu diesem Aspekt der erfindungsgemäßen Stoffgemenge, speziell Wärmeisolationsbeschichtungen, sei auch auf die deutsche Offenlegungsschrift 197 45 647 verwiesen.

Beansprucht wird im Rahmen der vorliegenden Erfindung auch die Verwendung der erfindungsgemäßen Stoffgemenge zur Herstellung von Dispersionen und Emulsionen, welche bevorzugt auf Wasser basieren. Zur Herstellung solcher Dispersionen und Emulsionen sei auf die Schriften WO 96/02597 und WO 98/47979 verwiesen, in welchen die Herstellung von Dispersionen und Emulsionen unter Verwendung von flüssigkristallinen Materialien beschrieben ist.

Gegenstand der vorliegenden Erfindung sind mithin ebensolche Dispersionen und Emulsionen, welche unter Verwendung der erfindungsgemäßen Stoffgemenge hergestellt wurden. Diese Dispersionen und Emulsionen können ebenfalls zum Bedrucken und Beschichten von Substraten, wie sie beispielhaft zuvor bereits beschrieben wurden, verwendet werden.

Die Verwendung der erfindungsgemäßen Stoffgemenge zur Herstellung von Filmen ist weiterer Gegenstand der vorliegenden Erfindung. Unter solchen Filmen sind insbesondere selbsttragende Schichten zu verstehen, wie sie durch Polymerisation der Stoffgemenge erhalten werden. Diese Filme können sich auf Substraten bzw. Unterlagen befinden, welche so beschaffen sind, dass deren leichte Ablösung und Übertragung auf andere Substrate oder Unterlagen zum permanenten Verbleib durch geeignete Maßnahmen möglich ist. Solche Filme sind beispielsweise im Bereich der Folienbeschichtung und in Kaschierverfahren verwendbar.

Gegenstand der vorliegenden Erfindung sind dementsprechend auch solche Filme, welche unter Verwendung der erfindungsgemäßen Stoffgemenge hergestellt worden sind.

Weiter wird die Verwendung der erfindungsgemäßen Stoffgemenge zur Herstellung von Pigmenten beansprucht.

Die Herstellung solcher Pigmente ist bekannt und beispielsweise ausführlich in der Schrift WO 99/11733 beschrieben. Darüber hinaus lassen sich aber auch in Form und Größe voreingestellte Pigmente unter Verwendung von Drucktechniken oder mit Hilfe von Netzen, in deren Zwischenräumen sich das flüssigkristalline Stoffgemenge befindet, herstellen. Der nachfolgenden Polymerisation oder Kondensation der Stoffgemenge schließt sich hierbei das Ab- bzw. Herauslösen vom Substrat bzw. aus dem Netz an. Diese Vorgehensweisen sind in den Schriften WO 96/02597, WO 97/27251, WO 97/27252 und EP 0 931 110 ausführlich beschrieben.

Diese Pigmente können sowohl einschichtig (homogen) sein als auch einen Mehrschichtaufbau aufweisen. Letztere Pigmente sind jedoch üblicherweise nur herstellbar, wenn Beschichtungsverfahren zur Anwendung kommen, in welchen sukzessive mehrere Schichten übereinander erzeugt und abschließend einer mechanischen Zerkleinerung unterworfen werden.

Gegenstand der vorliegenden Erfindung sind zudem aus solchen erfindungsgemäßen Stoffgemengen hergestellte Pigmente.

Beispiele:

Vorbemerkung:

Der Einfluss des chiralen Dotierstoffs auf die nematische Phase wird durch die "helikale Verdrillungsstärke", die "Helical Twisting Power" ("HTP") beschrieben. Sie ist definiert zu:

$$HTP = \lim_{x_{ch} \to 0} \left( \frac{dp^{-1}}{dx_{ch}} \right)_{T*} = \lim_{x_{ch} \to 0} \bar{n} \left( \frac{d\lambda_R^{-1}}{dx_{ch}} \right)_{T*} ,$$

wobei bedeuten:

p : Ganghöhe der cholesterischen Helix

$x_{ch}$ : molarer Anteil (Molenbruch) des chiralen Dotierstoffs

$\bar{n}$ : mittlerer Brechungsindex der cholesterischen Phase, für flüssigkristalline Phasen in der Regel zu ca. 1,6 angenommen

$\lambda_R$ : Wellenlänge des reflektierten Lichts

T* : reduzierte Temperatur, d.h. Quotient aus Messtemperatur $T_M$ und Klärtemperatur $T_c$

Für kleine Werte von $x_{ch}$ ergibt sich in guter Näherung eine lineare Abhängigkeit des Wertes von $p^{-1}$ bzw. $\lambda_R^{-1}$ von $x_{ch}$, so dass anstelle des Grenzwertes mit ausreichender Genauigkeit der Quotient selbst herangezogen werden kann. In diesem Konzentrationsbereich lässt sich der HTP-Wert durch nur eine $\lambda_R$-Messung bestimmen, wenn der Wert von $\lambda_R^{-1}$ für $X_{ch}$ = 0 zu Null angenommen wird. Damit vereinfacht sich die obige Gleichung zu

$$HTP = \lim_{x_{ch} \to 0} \bar{n} \left( \frac{d\lambda_R^{-1}}{dx_{ch}} \right)_{T*} \approx \bar{n} \left( \frac{d\lambda_R^{-1}}{dx_{ch}} \right)_{T*} \approx \bar{n} \left( \frac{\Delta\lambda_R^{-1}}{\Delta x_{ch}} \right)_{T*} =$$

$$= \bar{n} \left( \frac{\lambda_R^{-1}(X_{ch}) - \lambda_R^{-1}(0)}{x_{ch} - 0} \right)_{T*} = \bar{n} \left( \frac{\lambda_R^{-1}(X_{ch})}{x_{ch}} \right)_{T*}$$

Als chirale Dotierstoffe (Komponente C)) wurden verwendet Dotierstoff 1 ("DS1") :

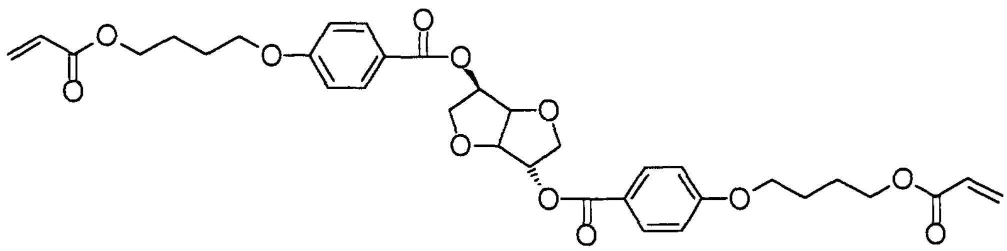

und

Dotierstoff 2 ("DS2"):

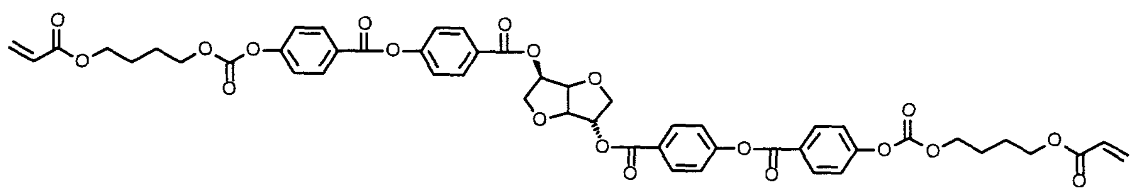

und als flüssigkristalline (nematische) Verbindung (Komponente A), "LC1") :

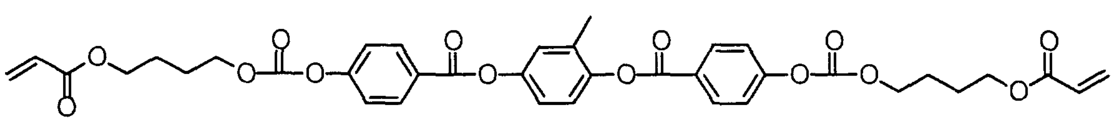

Die Herstellung von DS1, DS2 sowie von LC1 ist den Schriften WO 95/16007 (Beispiel 35), DE 198 43 724 A1 (Beispiel 1) und WO 97/00600 (Beispiel 6) respektive zu entnehmen.

Als reaktive Verbindungen (Komponente B)) wurden verwendet 1,4-Divinylbenzol ("DVB"; Fa. Merck), Styrol ("S"; Fa. BASF Aktiengesellschaft), 4-Vinylpyridin ("VP"; Fa. Acros Organics), N-Vinylformamid ("NVFA"; Fa. BASF Aktiengesellschaft) und N-Vinyl-2-pyrrolidon ("NVP"; Fa. BASF Aktiengesellschaft).

Beispiel 1: Das System LC1, DVB und DS2

In der nachfolgenden Tabelle 1 sind zu den Stoffgemengen aus LC1, DVB und DS2 neben den Angaben in mol-% (entsprechend dem Molenbruch der jeweiligen Komponente) zum Vergleich zusätzlich die Angaben in Gew.-% aufgeführt. Die Prozentangaben sind jeweils bezogen auf die Gesamtmischung der drei Komponenten zu verstehen. Der $HTP_{(mol)}$ bezeichnet den auf den Molprozentwert von DS2 bezogenen HTP-Wert, im Gegensatz zum Bezug auf den Gewichts- oder auch Volumenanteil, wie er in der einschlägigen Literatur ansonsten üblich ist. Hier wie auch in den nachfolgend beschriebenen Mischungsreihen wurden nur relativ kleine Molenbrüche des Dotierstoffs (unter 6 mol-%) verwendet, da man sich hier erfahrungsgemäß im linearen Bereich der Abhängigkeit von $\lambda_R^{-1}$ von $x_{ch}$ befindet.

Tabelle 1

| LC1 % | | DVB % | | DS2 % | | $HTP_{(mol)}$ (in $\mu m^{-1}$) |
|---|---|---|---|---|---|---|
| Gew. | mol | Gew. | mol | Gew. | mol | |
| 96,9 | 97,7 | 0 | 0 | 3,1 | 2,3 | 85 |
| 90,8 | 75,7 | 4,8 | 21,6 | 4,4 | 2,7 | 96 |
| 85,5 | 61,9 | 9,0 | 35,3 | 5,5 | 2,8 | 112 |
| 82,2 | 53,5 | 12,5 | 44,0 | 5,3 | 2,5 | 123 |

Der $HTP_{(mol)}$-Wert hängt linear vom Molenbruch des DVB ab. Die homogene flüssigkristalline (lyotrope) Phase aus LC1, DVB und DS2 ist bis zu einem Anteil von ca. 22 Gew.-% DVB stabil und zerfällt bei darüber hinaus gehenden Anteilen an DVB. Bei dieser Grenzkonzentration des DVB ergibt sich ein $HTP_{(mol)}$-Wert von 137 $\mu m^{-1}$.

Beispiel 2: Das System LC1, S und DS2

Da der Molekülaufbau des Styrols dem des DVB ähnlich ist, wurde nur ein Stoffgemenge mit 48,1 mol-% (83,5 Gew.-%) LC1, 50,4 mol-% (12,9 Gew.-%) S und 1,5 mol-% (3,6 Gew.-%) DS2 untersucht, wobei die Prozentangaben jeweils bezogen auf die Gesamtmischung der drei Komponenten zu verstehen sind. Der entsprechende $HTP_{(mol)}$-Wert liegt bei 148 $\mu m^{-1}$. Die homogene flüssigkristalline (lyotrope) Phase aus LC1, S und DS2 wird bei einem S-Anteil von > 16,7 Gew.-% inhomogen.

Beispiel 3: Das System LC1, VP und DS2

Die Prozentangaben in Tabelle 2 sind ebenfalls bezogen auf die Gesamtmischung der drei Komponenten zu verstehen.

Tabelle 2

| LC1 % | | VP % | | DS2 % | | $HTP_{(mol)}$ (in $\mu m^{-1}$) |
|---|---|---|---|---|---|---|
| Gew. | mol | Gew. | mol | Gew. | mol | |
| 96,9 | 97,7 | 0 | 0 | 3,1 | 2,3 | 85 |
| 91,1 | 71,2 | 5,1 | 26,6 | 3,8 | 2,2 | 99 |
| 90,6 | 66,3 | 6,6 | 32,3 | 2,8 | 1,4 | 116 |
| 89,8 | 62,6 | 7,7 | 36,1 | 2,5 | 1,3 | 120 |
| 83,0 | 48,5 | 12,7 | 49,6 | 4,3 | 1,9 | 147 |

Vergleichbar mit dem zuvor beschriebenen Styrolsystem wurde ab einem VP-Anteil von 17,7 Gew.-% Entmischung festgestellt, d.h. die bis dahin homogene lyotrope Phase zerfällt.

Beispiel 4: Das System LC1, NVFA und DS2

In der nachfolgenen Tabelle 3 sind die Zusammensetzungen der hergestellten Stoffgemenge aus den Komponenten LC1, NVFA und DS2 aufgeführt. Auch hier sind die Prozentangaben jeweils bezogen auf die Gesamtmischung der drei Komponenten zu verstehen.

Tabelle 3

| LC1 % | | NVFA % | | DS2 % | | $HTP_{(mol)}$ (in $\mu m^{-1}$) |
|---|---|---|---|---|---|---|
| Gew. | mol | Gew. | mol | Gew. | mol | |
| 96,9 | 97,7 | 0 | 0 | 3,1 | 2,3 | 85 |
| 91,5 | 58,4 | 5,1 | 40,0 | 3,4 | 1,6 | 138 |
| 87,0 | 41,5 | 9,8 | 57,4 | 3,2 | 1,1 | 189 |
| 81,8 | 33,7 | 12,7 | 64,7 | 5,5 | 1,6 | 200 |
| 81,0 | 32,1 | 13,5 | 66,3 | 5,5 | 1,6 | 206 |

Das Stoffgemenge mit dem höchsten Anteil an NVFA (13,5 Gew.-%, 66,3 mol-%) zeigt ein Phasenverhalten von N 45-56 I, d.h. im Temperaturbereich von 45 bis 56°C geht die lyotrope (chiral) nematische Phase in die isotrope Phase über. Entsprechend diesem Temperaturverhalten sollte dieses Stoffgemenge z.B. für Druckanwendungen geeignet sein. Im Vergleich zu den anderen getesteten reaktiven Verbindungen zeigt NVFA die größte Auswirkung auf den $HTP_{(mol)}$-Wert.

Beispiel 5: Das System LC1, NVP und DS2

Bei den zuvor beschriebenen Systemen wurde der Wert von $HTP_{(mol)}$ an den unvernetzten Stoffgemengen bestimmt. Die durch Vernetzung möglicherweise bewirkte Änderung im $HTP_{(mol)}$-Wert wurde ebenfalls untersucht. Dazu wurden drei Stoffgemenge mit unterschiedlichen Anteil an NVP entsprechend der nachfolgenden Tabelle 4 präpariert. Von jeder Zusammensetzung wurden zwei Proben mit je 2 % des Photoinitiators Irgacure 184 (bezogen auf die Gesamtmischung aus LC1, NVP und DS2) versehen. Eine der beiden Proben wurde vernetzt, während die andere Probe unvernetzt belassen wurde. Die Prozentangaben sind jeweils bezogen auf die Gesamtmischung der drei Komponenten zu verstehen.

Tabelle 4

| NVP mol-% | LC1 mol-% | DS2 mol-% | $\lambda_R$ in nm (unvernetzt) | $HTP_{(mol)}$ (unvernetzt) | $\lambda_R$ in nm (vernetzt) | $HTP_{(mol)}$ (vernetzt) |
|---|---|---|---|---|---|---|
| 24,5 | 73,4 | 2,1 | 674 | 107 | 654 | 110 |
| 40,5 | 57,4 | 2,1 | 569 | 124 | 552 | 128 |
| 51,7 | 46,2 | 2,1 | 499 | 140 | 482 | 145 |

Der kleine Unterschied zwischen dem $HTP_{(mol)}$-Wert für das unvernetzte und das entsprechende vernetzte System lässt sich als Effekt der Schrumpfung des Materials durch die eingetretene Vernetzung deuten. Die Unterschiede der $HTP_{(mol)}$-Werte der unvernetzten und vernetzten Proben liegen jedoch innerhalb der üblichen Fehlergrenzen bei der Bestimmung der HTP.

Beispiel 6: Das System LC1, DVB und DS1

Ca. 500 mg LC1 wurden mit DVB und ca. 4 Gew.-% Photoinitiator Irgacure 907 (bezogen auf die Gesamtmenge an LC1, DVB und Photoinitiator) versehen und zum Zwecke der Homogenisierung in ca. 2,5 ml Aceton gelöst. Je 0,45 ml dieser Lösung wurden in sechs Schnappdeckelgläschen mit unterschiedlichen Mengen (11,2, 9,6, 8,2, 6,4, 4,2 und 3,3 mg) DS1 eingefüllt. Das Aceton wurde bei Raumtemperatur abgedampft und der tatsächliche Gehalt an DVB mittels thermogravimetrischer Analyse (Netzsch Simultan-Thermoanalyse STA 409) zu 19 Gew.-% (bezogen auf die Mischung aus LC1 und DVB) bestimmt.

Analog wurde zur Herstellung der Stoffgemenge mit 16 Gew.-% DVB (bezogen auf die Mischung aus LC1 und DVB) vorgegangen.

Die erhaltenen Stoffgemenge wurden zwischen zwei Objektträgern in der cholesterischen Phase orientiert und mittels UV-Licht (UV-Lampe Amko LTI mit Osram Xe-Kurzbogenlampe XBO, 150 W) bei einer Temperatur von 40°C photopolymerisiert. Die Bestimmung der reflektierten Wellenlänge $\lambda_R$ erfolgte mit einem Hitachi-U-300- bzw. einem Perkin-Elmer-Lambda-19-UV/VIS/NIR-Spektrometer.

In Tabelle 5 sind die Prozentangaben jeweils bezogen auf die Mischung aus LC1 und DVB zu verstehen.

Tabelle 5

| LC1 | DVB | $HTP_{(mol)}$ (in $\mu m^{-1}$) |
|---|---|---|
| Gew.-% | Gew.-% | |
| 100 | 0 | 34,4 |
| 87,0 | 13,0 | 58,4 |
| 81,0 | 19,0 | 73,8 |

Beispiel 7: Vergleich der Systeme aus LC1/DS2 und LC1/NVFA/DS2

Tabelle 6 zeigt die reflektierte Wellenlänge $\lambda_R$ in nm in Abhängigkeit von der Konzentration an Dotierstoff DS2 für das reine Basisimaterial LC1 und eine lyotropes Stoffgemenge aus LC1 und NVFA im molaren Verhältnis 35,3 : 64,7. Die Dotierstoffkonzentration $x_{DS2}$ ist in mol-% angegeben und bezieht sich auf die Gesamtmolzahl von LC1, NVFA und DS2.

Tabelle 6

| $x_{DS2}$ | $\lambda_R$ für LC1 | $\lambda_R$ für lyotrope Mischung |
|---|---|---|
| 0,95 | - | 760 |
| 1,06 | - | 684 |
| 1,12 | - | 643 |
| 1,18 | - | 609 |
| 1,29 | - | 557 |
| 1,39 | - | 522 |
| 1,53 | - | 476 |
| 2,29 | 745 | - |
| 2,64 | 682 | - |
| 2,86 | 648 | - |
| 3,30 | 523 | - |
| 3,52 | 490 | - |
| 3,73 | 457 | - |

Wie Tabelle 6 zu entnehmen ist, kann zur Erzielung farbiger Effekte im sichtbaren Wellenlängenbereich der Anteil von chiralem Dotierstoff DS2 in einem Stoffgemenge von LC1 und NVFA (Verhältnis von 35,3 zu 64,7 mol-%) von ca. 2,2 bis 3,8 mol-% auf ca. 1,0 bis 1,5 mol-% reduziert werden.

Mittels der erfindungsgemäßen Stoffgemenge ist es daher möglich, einen deutlichen Anteil (im Falle des NVFA bis ca. 65 mol-%) des flüssigkristallinen Basismaterials durch kostengünstige reaktive Verbindungen zu ersetzen. Weiterer positiver Nebeneffekt ist, dass sich gleichzeitig der Anteil an chiralem Dotierstoff reduzieren lässt, ohne dass das optische Verhalten gegenüber dem reinen (dotierten) Basismaterial in unerwünschter Weise verändert wird.

## Patentansprüche

**1.** Flüssigkristalline Stoffgemenge, enthaltend als Komponenten

A) mindestens eine Verbindung der Formel I

$$Z^1\text{-}Y^1\text{-}A^1\text{-}Y^3\text{-}M\text{-}Y^4\text{-}A^2\text{-}Y^2\text{-}Z^2 \quad \text{I,}$$

in welcher die Variablen unabhängig voneinander folgende Bedeutung haben:

$Z^1$ und $Z^2$ reaktive Gruppierungen,

$Y^1$ bis $Y^4$ eine chemische Einfachbindung, Sauerstoff, Schwefel, -O-CO-, -CO-O-, -O-CO-O-, -CO-NR-, -NR-CO-, -O-CO-NR-, -NR-CO-O- oder -NR-CO-NR-,

R Wasserstoff oder $C_1$-$C_4$-Alkyl,

$A^1$ und $A^2$ Spacer mit 1 bis 30 C-Atomen, in welchen die Kohlenstoffkette durch ein oder mehrere Methyl, Fluor, Chlor oder Brom substituiert und/oder durch Sauerstoff in Etherfunktion, Schwefel in Thioetherfunktion oder durch nichtbenachbarte Imino- oder $C_1$-$C_4$-Alkyliminogruppen unterbrochen sein kann und

M eine mesogene Gruppe,

B) mindestens eine reaktive Verbindung ausgewählt aus der Gruppe bestehend aus den Untergruppen

b1) Vinyl- oder Allylethern,

b2) Vinyl- oder Allylestern gesättigter oder ungesättigter Carbonsäuren,

b3) Methacryl- oder Acrylsäureestern mono- oder polyfunktioneller Alkohole,

b4) Polyester(meth)acrylaten,

b5) vinylaromatischen oder vinylheteroaromatischen Verbindungen und

b6) Verbindungen der allgemeinen Formel II

$$CH_2{=}CH{-}NR^2{-}R^1 \qquad \text{II,}$$

in welcher bedeuten:

$R^1$

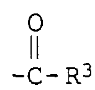

oder $-R^3$,

$R^2$ Wasserstoff, $C_1$-$C_4$-Alkyl oder gemeinsam mit $R^3$ eine gesättigte oder ungesättigte $C_3$-, $C_4$- oder $C_5$-Alkylenbrücke, in der bis zu zwei Gruppen $CH_2$ durch NH, N($C_1$-$C_4$-Alkyl), N($C_6$-$C_{10}$-Aryl) oder Sauerstoff und bis zu zwei Gruppen CH durch N ersetzt sein können und

$R^3$ Wasserstoff, $C_1$-$C_4$-Alkyl oder einen Rest, der zusammen mit $R^2$ eine gesättigte oder ungesättigte $C_3$-, $C_4$- oder $C_5$-Alkylenbrücke, in der bis zu zwei Gruppen $CH_2$ durch NH, N($C_1$-$C_4$-Alkyl), N($C_6$-$C_{10}$-Aryl) oder Sauerstoff und bis zu zwei Gruppen CH durch N ersetzt sein können, bildet, sowie

C) gegebenenfalls weitere Zusätze.

**2.** Stoffgemenge nach Anspruch 1, enthaltend als Komponente B) mindestens eine Verbindung ausgewählt aus der Gruppe bestehend aus den Untergruppen b3), b5) und b6) gemäß Anspruch 1.

**3.** Stoffgemenge nach Anspruch 1, enthaltend als Komponente B) mindestens eine Verbindung ausgewählt aus der Gruppe bestehend aus den Untergruppen b5) und b6) gemäß Anspruch 1.

**4.** Stoffgemenge nach einem oder mehreren der Ansprüche 1 bis 3, enthaltend als Komponente A) mindestens eine Verbindung der Formel I, in welcher $Z^1$ und/oder $Z^2$ photopolymerisierbare Gruppierungen bedeuten.

**5.** Stoffgemenge nach Anspruch 4, enthaltend als weiteren Zusatz (Komponente C)) mindestens einen Photoinitiator.

**6.** Stoffgemenge nach einem oder mehreren der Ansprüche 1 bis 5, enthaltend als weiteren Zusatz (Komponente C)) mindestens eine chirale Verbindung.

**7.** Verwendung von Stoffgemengen gemäß einem oder mehreren der Ansprüche 1 bis 6 zur Herstellung optischer Bauelemente.

**8.** Optische Bauelemente, welche unter Verwendung von Stoffgemengen gemäß einem oder mehreren der Ansprüche 1 bis 6 hergestellt worden sind.

**9.** Verwendung von Stoffgemengen gemäß einem oder mehreren der Ansprüche 1 bis 6 zum Bedrucken oder Beschichten von Substraten.

**10.** Bedruckte oder beschichtete Substrate, welche unter Verwendung von Stoffgemengen gemäß einem oder mehreren der Ansprüche 1 bis 6 hergestellt worden sind.

**11.** Verwendung von Stoffgemengen gemäß einem oder mehreren der Ansprüche 1 bis 6 zur Herstellung von Dispersionen und Emulsionen.

**12.** Dispersionen und Emulsionen, welche unter Verwendung von Stoffgemengen gemäß einem oder mehreren der Ansprüche 1 bis 6 hergestellt worden sind.

**13.** Verwendung von Stoffgemengen gemäß einem oder mehreren der Ansprüche 1 bis 6 zur Herstellung von Filmen.

**14.** Filme, welche unter Verwendung von Stoffgemengen gemäß einem oder mehreren der Ansprüche 1 bis 6 hergestellt worden sind.

**15.** Verwendung von Stoffgemengen gemäß Anspruch 5 oder 6 zur Herstellung von Pigmenten.

**16.** Pigmente, welche unter Verwendung von Stoffgemengen gemäß Anspruch 5 oder 6 hergestellt worden sind.